# EUROPEAN PATENT APPLICATION

(11) **EP 4 060 480 A1**
(43) Date of publication of application: **21.09.2022**
(21) Application number: 21163143.7
(22) Date of filing: 17.03.2021
(51) Int. Cl.: G06F 8/51, G06F 8/76

(54) **A METHOD FOR ADAPTING A SCRIPT**

(71) Applicant: Siemens Aktiengesellschaft, 80333 München (DE)
(72) Inventor: Eckl, Roland, 91301 Forchheim (DE)

(57) **Abstract**

The current disclosure describes a method of executing a script. The script comprises one or more functions calls. The method comprises detecting at least one function call from the one or more function calls in the script, defining an asynchronous function wherein the asynchronous function is for checking a return value of the at least one function call from the one or more function calls, and nesting the at least one function call within an awaited function call of the asynchronous function for executing the script, wherein the return value of the at least one function call is passed as an input value to the asynchronous function. Accordingly, using the newly defined asynchronous function, the current disclosure is able to check the return of the function call and accordingly determine if an await operation is to be performed or not.

## Description

The current disclosure relates to execution of scripts and in particular, relates to scripts which may be executed on various environments including browsers and other such web application on industrial devices. Generally, scripts are written with a particular execution environment in mind and accordingly implement design choices relevant to the particular environment. However, due to migration, a script may be executed in a new environment and accordingly, certain aspects in the script may need to be updated to execute properly in the new environment. This is particularly the case when synchronous functions or synchronous function calls are included in the script, a change in the behavior of the function due to the environment can affect the execution of the script. For example, a previously synchronous script or API may be executed in a browser which enforces asynchrony.

In order to address this, scripts are often rewritten in the form that they call different methods depending on the environment and react accordingly differently if the method is synchronous in one environment and asynchronous in another. However, this requires additional effort on the part of the programmer as the programmer has to explicitly take care of the executability in the different environments. Accordingly, the programmer has to create multiple scripts (per execution environment) or a single script with additional code that selectively executes different code paths depending on the environment. Both cases result in an immense overhead for the programmer as well as poor maintainability and testability.

In another approach, instead of adapting the script for various execution environments, the script is run virtually. In the target environment, the original environment is deployed through virtualization or emulation. In this case, the virtualization layer must provide the implementation between synchronous and asynchronous aspects. However, this is not always possible, or at least associated with an immense overhead. In another approach, the script could be rewritten such that called method (which was called in a synchronous fashion) is replaced with a method that is still synchronous but internally loops to check the result of the environment's async version. However, running the loop will continuously generate processor load. In single-threaded environments such as JavaScript, it can even happen that the actually asynchronous call is not executed at all, because the loop itself runs continuously and no time window results to continue elsewhere.

Accordingly, there is a need for a method of executing scripts in various environments which addresses the issues mentioned above.

Accordingly, the current disclosure describes a method of executing a script. The script comprises one or more functions calls. The method comprises detecting at least one function call from the one or more function calls in the script, defining an asynchronous function wherein the asynchronous function is for checking a return value of the at least one function call from the one or more function calls, and nesting the at least one function call within an awaited function call of the asynchronous function for executing the script, wherein the return value of the at least one function call is passed as an input value to the asynchronous function. In an example, the method further comprises detecting a first synchronous function definition associated with a corresponding first synchronous function, in the script and modifying a function return in the first synchronous function definition associated with the corresponding at least one synchronous function, wherein modifying comprises including a predefined promise type in the function return. The defined asynchronous function is configured to determine a return of a function call from the one or more function calls is associated with the predefined promise type and await the function call based on the return. In an example, the method further comprises generating an abstract syntax tree of the script. In an example, the asynchronous function checks the return value of the at least one function call from the one or more function calls, to determine if the return value is of the predefined promise type. In an example, the defined asynchronous function is configured to perform an await operation based on the return of the function call. In an example, the at least one function call is associated with a remote object.

In another aspect, the current disclosure describes a non-transitory storage medium for executing a script. The non-transitory storage medium comprises a plurality of instructions, which when executed on one or more processors, cause the one or more processors to detect at least one function call from the one or more function calls in the script, define an asynchronous function wherein the asynchronous function is for checking a return value of the at least one function call from the one or more function calls and nest the at least one function call within an awaited function call of the asynchronous function, wherein the return value of the at least one function call is passed as a input value to the asynchronous function.

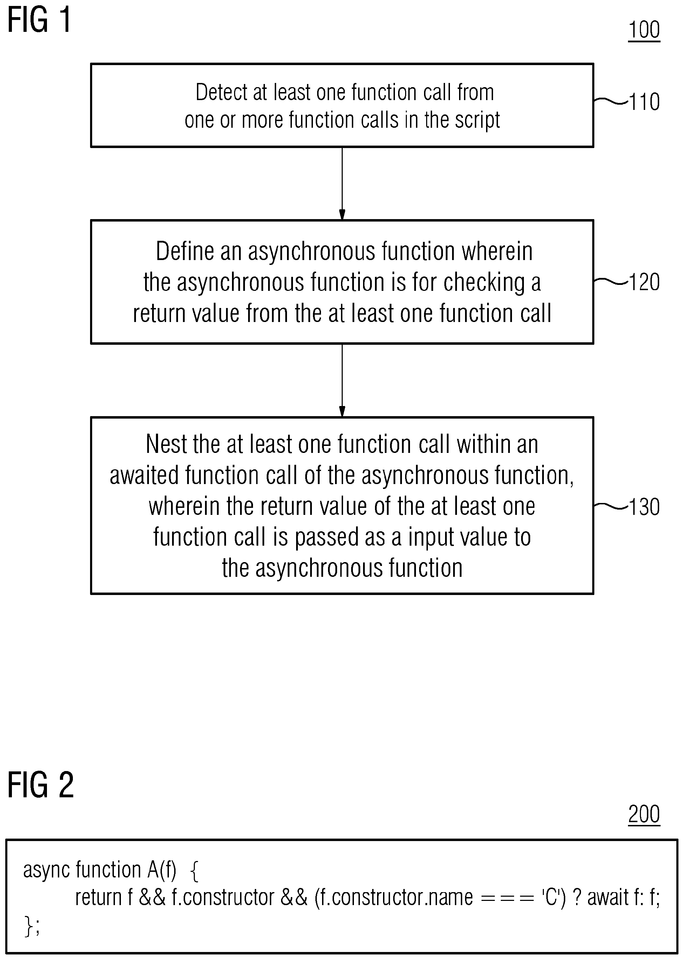

In yet another aspect, the current disclosure describes an industrial device executing a script. The industrial device comprises one or more processors connected to a memory module. The one or more processors are configured to detect at least one function call from the one or more function calls in the script, define an asynchronous function wherein the asynchronous function is for checking a return value of the at least one function call from the one or more function calls and nest the at least one function call within an awaited function call of the asynchronous function, wherein the return value of the at least one function call is passed as an input value to the asynchronous function. The advantages of the methods apply to the devices described herein. These aspects are further described in relation figures 1-6.

The following detailed description references the drawings, wherein:
Figure 1 illustrates an example method for executing a script;
Figure 2 illustrates an example asynchronous check function defined in the script;
Figure 3 illustrates an example method for modifying a synchronous function in the script;
Figure 4 illustrates an example first script and an example second script, where the first script is invoking a function defined in the second script;
Figure 5 illustrates an example section of the first script and an example modified section of the first script in accordance with the methods described herein; and
Figure 6 illustrates an example industrial device for executing a script.

Figure 1 illustrates a method 100 for executing a script in on an industrial device (not shown in figure). The script comprises a plurality of function calls invoking a plurality of functions. The plurality of functions includes one or more functions which are defined within the script and one or more functions which are defined outside the script (for example in another script or in an application programming interface) . The plurality of functions includes one or more synchronous functions and one or more asynchronous functions. Particularly, the functions which are may be not defined in the script may be implemented synchronously or asynchronously (depending on the environment). Accordingly, during the execution of the script, certain aspects of the script are modified to ensure that the function calls to asynchronous functions (which were previously synchronous) do not hamper the control flow of the script. This is explained below. For sake of explanation, the method 100 is executed on an industrial device (not shown in the figure). The industrial device may be connected to other devices on which other scripts or APIs are running and can be accessed from the industrial device. Additionally, other scripts and APIs may be running and can be invoked during the execution of the script.

At step 110, the industrial device detects at least one function call from the one or more function calls in the script. In an example, to detect the at least one function, the script is parsed and converted into an abstract syntax tree (AST). The abstract syntax tree is then analyzed to detect the function calls.

Then at step 120, the industrial device defines a new asynchronous function. In an example, the industrial defines the new asynchronous function within the code of the script. In an example, the asynchronous function is defined outside the script, in the runtime environment and accordingly can be called by the script. The asynchronous function is for checking a return value of the at least one function call from the one or more function calls. An example of such an asynchronous function is shown in figure 2. Figure 2 illustrates an asynchronous function A (200). As shown in the figure, the function A is defined to receive a variable (also referred to as input variable and check if the input variable matches a predefined variable type (shown as 'C' in the figure). If the received input variable is not of the predefined type, then the input variable is returned right away and if the input received variable is of the predefined type then an await operation is carried out on the variable. Effectively, the asynchronous function checks the type of the input variable and determines whether an await operation is to be carried out or not. The predefined variable type is of a promise type. The predefined promise type is an object type representing the eventual completion or failure of an asynchronous operation.

Then at step 130, the industrial device nests the at least one function call within an awaited function call of the asynchronous function. By nesting the at least on function call within the function call of the asynchronous, the return value of the at least one function call is passed as an input value to the asynchronous function and accordingly, the asynchronous function checks the return value of the at least one function and determines if an await operation is to be performed. The asynchronous function checks for a special or predefined promise type which is indicative of a change in the synchroneity of the called function. Based on the presence of the special promise type, the asynchronous function performs the await function. The usage of the special promise type is defined below.

Accordingly, using the newly defined asynchronous function, the method is able to handle synchronicity or asynchronicity of functions. Accordingly, through this automatic method of modification of script by adding the asynchronous function for checking and by wrapping existing function calls in the asynchronous function calls, overall ease in the deployment of the script is improved.

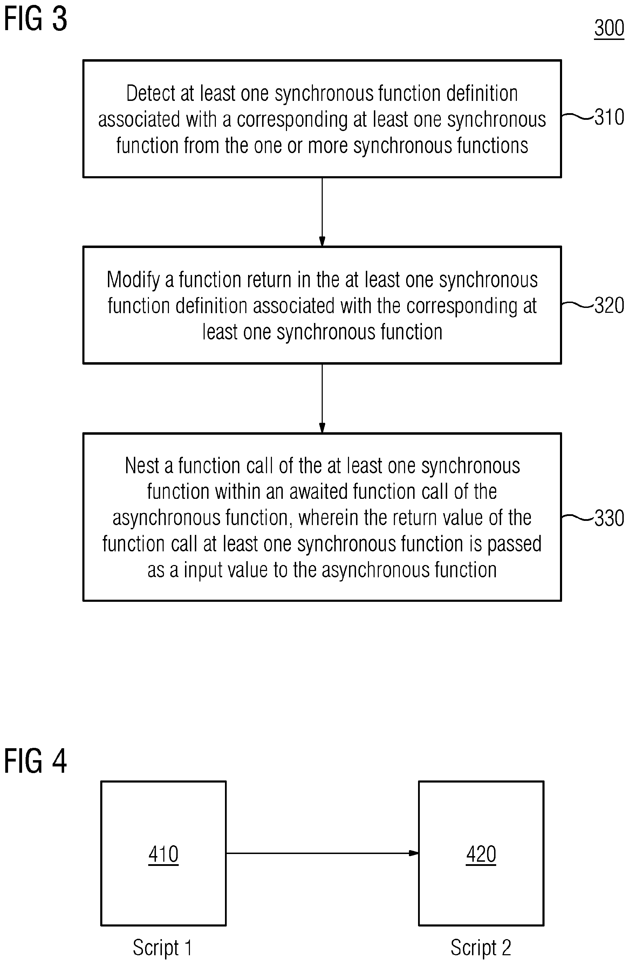

In an example, where the script includes one or more synchronous functions (which include functions calls which may be asynchronous), the industrial device is further configured to modify the synchronous functions to handle function calls within the synchronous functions. This is demonstrated in method 300 as shown in figure 3. At step 310, the industrial device detects a first synchronous function definition associated with a corresponding first synchronous function in the script. As mentioned above, in an example, the abstract syntax tree is used to determine the first synchronous function definition. Then, at step 320, the industrial device modifies a function return in the first synchronous function definition associated with the corresponding at least one synchronous function. The step of the modifying comprises including a predefined promise type in the function return. The predefined promise type is an object type representing the eventual completion or failure of an asynchronous operation. Essentially, a promise is a returned object to which callbacks are attached, instead of passing callbacks into a function. By adding the promise return type, even though the function is run synchronously, the promise return type indicates to the calling function that an actual return will be provided later on. The predefined promise type as included in the function return is a specially defined promise used only for the purpose of script modification and is distinct from other promise types which may be generally used in the scripts. Accordingly, it is this predefined promise type for which the above-mentioned asynchronous function checks the return type.

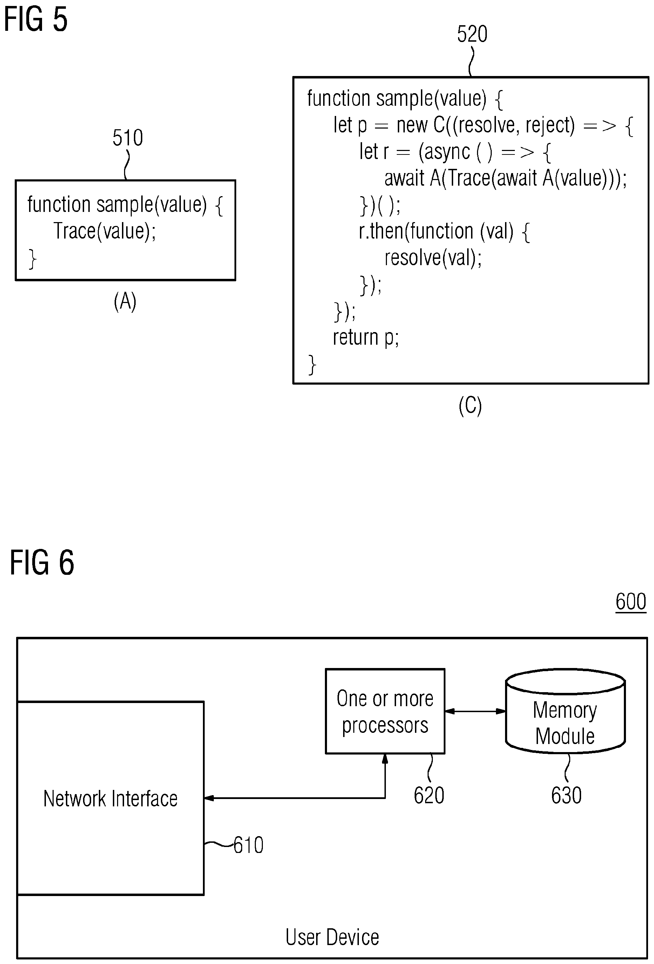

Additionally, the one or more function calls of the modified synchronous function calls are also wrapped in the function calls of the above mentioned asynchronous function call to check if the return value from the modified synchronous function is the newly added promise type or not. If the return value is the newly added promise type, then as mentioned previously, an await operation is performed. If not, then normal control flow occurs. Accordingly, this ensures that the flow of the script is not affected due to asynchronous function calls with the synchronous function. Both method 200 and method 300 are further explained using an example shown in figures 4 and 5.

Figure 4 illustrates two scripts 410 and 420 where script 410 is executed on the industrial device and during its execution, calls one or more functions in the script 420 (which may or may not be executed in the industrial device) . In an example, the script 410 is executed by a browser or web application on the industrial device and the methods 200 and 300 are executed by the browser/ web application prior to the execution of the script 410. For the sake of the explanation of the example, the section of script 410 which is modified in accordance with methods 200 and 300 is illustrated in section a of the figure 5. As shown in the figure, the script includes a synchronous function which receives an input variable 'value', invokes a trace function, and passes the variable 'value' during invocation.

Accordingly, in accordance with method 200, the web application on the industrial device detects the function call 'trace' in accordance to step 210 of the method 200. Then at step 220, the web application defines the asynchronous check function 200 'A' as shown in figure 2. Then at step 230, the web application amends the script 410 by wrapping the function call 'trace' in a function call of the asynchronous function 'A' wherein the return value from the trace function is provided to the asynchronous function 'A' and accordingly the asynchronous function 'A' checks whether the return value from the trace function is a promise type or not and accordingly performs an await operation if the return type is of the promise type. Then, according to method 300, the web application on the industrial device modifies the function 'sample' to ensure that any other script which calls the function 'sample' are unaffected by the asynchronous function calls with the function sample. Accordingly, in accordance with method 300, the web application changes the function 'sample' by adding a promise return variable 'p'. As shown in the figure, the return variable 'p' is of the predefined promise type 'C'. Accordingly, this allows for handling synchronous and asynchronous function calls within the synchronous function sample. In an example, in addition to the function calls, the web application is capable of wrapping or encapsulating objects in the asynchronous check function. For example, as shown in the figure 5, the variable 'value' may be an object variable and accordingly, passing of the object may invoke functions inherently associated with the object (such as constructors, etc.). Accordingly, to handle these functions, such objects are also wrapped in the asynchronous check function 'A'. The end result of such modifications is shown in section B of the figure 5.

It may be noted that while the above methods are explained using industrial device and web application, the above methods may be stored as instructions on the industrial device. Accordingly, the present disclosure can take a form of a computer program product comprising program modules accessible from computer-usable or computer-readable medium storing program code for use by or in connection with one or more computers, processing units, or instruction execution system. For example, the functions of industrial device may be realized across one or more devices. Accordingly, the current disclosure as describes an industrial gateway device 600. The industrial device 600 includes a network interface 610, one or more processors 620 and a non-transitory storage medium or memory module 630. The non-transitory storage medium or memory module 330 contains a plurality of instructions for executing a script. The plurality of instructions which when executed on one or more processors 620, cause the one or more processors 620 to detect at least one function call from the one or more function calls in the script, define an asynchronous function wherein the asynchronous function is for checking a return value of the at least one function call from the one or more function calls, and nest the at least one function call within an awaited function call of the asynchronous function. The return value of the at least one function call is passed as an input value to the asynchronous function for the asynchronous function to the check the return value and determine if an await operation is to be performed or not.

## Claims

1. A method (100) of executing a script (510), the script (510) comprising one or more functions calls, the method (100) comprising:
a. Detecting (110) at least one function call from the one or more function calls in the script (510);
b. Defining (120) an asynchronous function (200) wherein the asynchronous function is for checking a return value of the at least one function call from the one or more function calls; and
c. Nesting (130) the at least one function call within an awaited function call of the asynchronous function for executing the script (510), wherein the return value of the at least one function call is passed as an input value to the asynchronous function (200).

2. The method (100) as claimed in claim 1, further comprising:
a. Detecting (310) a first synchronous function definition associated with a corresponding first synchronous function, in the script; and
b. Modifying (320) a function return in the first synchronous function definition associated with the corresponding at least one synchronous function, wherein modifying comprises including a predefined promise type in the function return;
wherein the defined asynchronous function (200) is configured to determine a return of a function call from the one or more function calls is associated with the predefined promise type and await the function call based on the return.

3. The method (100) as claimed in claim 1, wherein the method (100) further comprises generating an abstract syntax tree of the script.

4. The method (100) as claimed in claim 1, wherein the asynchronous function (200) checks the return value of the at least one function call from the one or more function calls, to determine if the return value is of the predefined promise type.

5. The method (100) as claimed in claim 1, wherein the defined asynchronous function (200) is configured to perform an await operation based on the return of the function call.

6. The method (100) as claimed in claim 1, wherein the at least one function call is associated with a remote object.

7. A non-transitory storage medium (630) for executing a script (510), the script (510) comprising one or more function calls, the non-transitory storage medium (630) comprising a plurality of instructions, which when executed on one or more processors (620), cause the one or more processors (620) to:
a. detect at least one function call from the one or more function calls in the script (510);
b. define an asynchronous function (200) wherein the asynchronous function (200) is for checking a return value of the at least one function call from the one or more function calls; and
c. nest the at least one function call within an awaited function call of the asynchronous function (200), wherein the return value of the at least one function call is passed as an input value to the asynchronous function (200).

8. An industrial device (600) executing a script (510), the script (510) comprising one or more functions calls, the industrial device (600) comprising:
a. one or more processors (620) connected to a memory module (630), the one or more processors (620) configured to:
i. detect at least one function call from the one or more function calls in the script (510);
ii. define an asynchronous function (200) wherein the asynchronous function (200) is for checking a return value of the at least one function call from the one or more function calls; and
iii. nest the at least one function call within an awaited function call of the asynchronous function (200), wherein the return value of the at least one function call is passed as an input value to the asynchronous function (200) .
